Europäisches Patentamt

European Patent Office

Office européen des brevets

(19)

(11) **EP 1 061 241 A1**

(12) **DEMANDE DE BREVET EUROPEEN**

(43) Date de publication:
**20.12.2000   Bulletin 2000/51**

(51) Int Cl.$^7$: **F01N 11/00**

(21) Numéro de dépôt: **00401648.1**

(22) Date de dépôt: **09.06.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **16.06.1999  FR 9907623**

(71) Demandeur: **Renault**
**92100 Boulogne Billancourt (FR)**

(72) Inventeurs:
• **Batisson, Cathy**
  **Clos St. Vigor, 78220 Viroflay (FR)**
• **Beurthey, Stéphan**
  **91430 Vauhallan (FR)**

(54) **Procédé d'estimation de la température d'un pot catalytique de traitement des gaz d'échappement d'un moteur à combustion interne**

(57)    Suivant ce procédé, a) on estime par des calculs itératifs la température courante TG(i) d'un organe de chauffage (3) des gaz d'échappement en fonction de l'énergie qui lui est fournie, de la capacité thermique de l'organe (3), d'un échange thermique convectif entre l'organe (3) et les gaz d'échappement, et b) on estime par des calculs itératifs la température courante TC(i) du pot catalytique (5), en fonction de la température courante de l'organe (3), de la capacité thermique du pot (5), d'un échange thermique convectif entre le pot (5) et les gaz d'échappement, et de l'énergie dégagée dans le pot (5) par des réactions d'oxydation d'espèces chimiques polluantes contenues dans lesdits gaz d'échappement.

**Description**

La présente invention est relative à un procédé d'estimation de la température d'un pot catalytique de traitement des gaz d'échappement d'un moteur à combustion interne passant dans une ligne d'échappement comportant, en amont du pot, un organe de chauffage électrique desdits gaz d'échappement.

On sait que les gaz d'échappement des moteurs à combustion interne propulsant des véhicules automobiles par exemple, contiennent des espèces chimiques nocives que l'on traite couramment dans des lignes d'échappement équipées de dispositifs tels que pièges à hydrocarbures, dispositifs de chauffage, pots catalytiques, etc... propres à transformer ces espèces chimiques nocives en espèces moins nocives, voire inoffensives.

L'efficacité d'une telle ligne d'échappement est conditionnée par le bon fonctionnement de ces dispositifs, dont on sait qu'il dépend étroitement de leur température. C'est ainsi en particulier qu'un pot catalytique est inefficace en dessous d'une certaine température. Au-dessus d'une autre température, il peut être détruit. Il convient donc de connaître la température de fonctionnement du pot, de manière à pouvoir la maîtriser.

Pour ce faire, on peut utiliser un capteur de température placé dans le pot. Cette solution présente cependant deux inconvénients : d'une part le temps de réponse des capteurs de température utilisables actuellement est trop long vis-à-vis de la dynamique thermique du pot, et d'autre part, la fabrication du capteur et son installation dans le pot sont coûteuses.

Pour palier ces inconvénients, on peut mettre en mémoire l'évolution de la température du pot, par exemple à partir de mesures réalisées au banc. Cette solution s'avère cependant non satisfaisante, particulièrement lors du fonctionnement du moteur en modes transitoires.

On évite tous ces inconvénients en procédant à l'évaluation de la température du pot comme décrit, par exemple, dans le brevet français n° 2 735 527, qui concerne un procédé d'évaluation et de surveillance de la température d'un pot catalytique réchauffé par effet Joule au démarrage d'un moteur à combustion interne débitant des gaz d'échappement dans ce pot, suivant lequel on calcule itérativement la température atteinte par le pot lors d'incréments successifs de la quantité de chaleur fournie au pot par effet Joule, en fonction de la capacité thermique du pot et de celle de la masse de gaz réchauffée par ledit pot pendant l'incrément considéré, et on identifie la température calculée à la température à surveiller.

Bien que ce procédé réponde généralement à ce que l'on en attend, il est apparu un besoin pour une évaluation de la température du pot encore plus précise que celle que l'on peut obtenir à partir du procédé décrit ci-dessus, qui ne tient compte que de la capacité thermique du pot et de celle de la masse des gaz d'échappement, réchauffés par la quantité de chaleur fournie.

La présente invention a justement pour but de fournir un procédé d'estimation de la température d'un pot catalytique, de précision améliorée, y compris pendant les phases transitoires du fonctionnement du moteur.

On atteint ce but de l'invention, ainsi que d'autres qui apparaîtront à la lecture de la description qui va suivre, avec un procédé d'estimation de la température d'un pot catalytique de traitement des gaz d'échappement d'un moteur à combustion interne passant dans une ligne d'échappement comportant, en amont du pot, un organe de chauffage électrique desdits gaz d'échappement, ce procédé étant remarquable en ce que a) on estime par des calculs itératifs la température courante dudit organe de chauffage, en fonction de l'énergie qui lui est fournie, de la capacité thermique dudit organe, et d'un échange thermique convectif entre l'organe et les gaz d'échappement, et b) on estime par des calculs itératifs la température courante du pot catalytique, en fonction de la température courante dudit organe, de la capacité thermique du pot, d'un échange thermique convectif entre le pot et les gaz d'échappement, et de l'énergie dégagée dans le pot par des réactions d'oxydation d'espèces chimiques polluantes contenues dans lesdits gaz d'échappement.

Comme on le verra plus loin en détail, la prise en compte par le procédé suivant l'invention d'échanges convectifs entre les gaz d'échappement d'une part, l'organe de chauffage et le pot catalytique d'autre part, et de l'énergie dégagée par des réactions d'oxydation des gaz d'échappement dans le pot, permet d'affiner la précision de l'estimation de la température du pot.

Selon d'autres caractéristiques du procédé suivant l'invention, la température courante de l'organe de chauffage et/ou la température courante du pot catalytique, sont aussi fonction d'échanges thermiques entre l'organe et/ou le pot et l'extérieur.

D'autres caractéristiques et avantages de la présente invention apparaîtront à la lecture de la description qui va suivre et à l'examen du dessin annexé dans lequel la figure unique représente schématiquement un moteur à combustion interne et la ligne d'échappement qui lui est associée, propres à la mise en oeuvre du procédé suivant la présente invention.

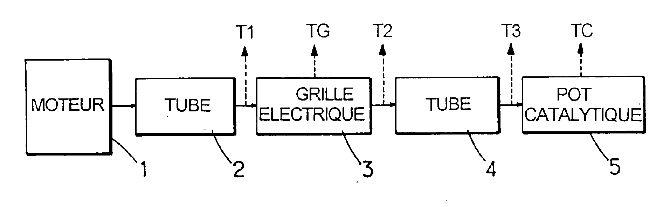

On se réfère à la figure 1 du dessin annexé où l'on a schématisé un moteur à combustion interne et la ligne 2,3,4,5 dans laquelle il débite des gaz d'échappement. Cette ligne comprend ainsi un tube 2 raccordant le moteur 1 à l'entrée d'un organe de chauffage 3 des gaz d'échappement qui le traversent, la sortie de l'organe 3 débitant les gaz éventuellement réchauffés par cet organe dans un pot catalytique 5, par l'intermédiaire d'un autre tube 4. Il est entendu que l'organe de chauffage est actif essentiellement lors d'un démarrage à froid du moteur, de manière à porter rapidement le pot 5 à sa température de fonctionnement optimale.

Ce pot 5 catalyse classiquement des réactions d'oxydo-réduction d'espèces chimiques polluantes contenues dans les gaz d'échappement : monoxyde de carbone CO, hydrocarbures imbrûlés HC et oxydes d'azote NOx. Au démarrage du moteur, la température des gaz d'échappement est basse et le chauffage du pot provient essentiellement de son chauffage par l'organe 3 puis, à partir d'une certaine température (200° C environ), par des réactions chimiques exothermiques qui se développent dans le pot lui-même.

Le pot 5 n'étant complètement opérationnel, c'est-à-dire capable de traiter toutes les espèces chimiques polluantes mentionnées ci-dessus, qu'au-dessus d'une température relativement élevée, de l'ordre de 400°C par exemple, il convient que sa montée en température soit aussi rapide que possible, sans que pour autant courir un risque de destruction du pot par chauffage excessif. On recherche donc, suivant l'invention, une modélisation de la température du pot permettant de contrôler avec précision cette montée en température, notamment dans la zone d'entrée du pot, qui est la plus sollicitée thermiquement.

Pour ce faire, suivant l'invention, on estime par des calculs itératifs la température T1 à l'entrée de l'organe de chauffage 3, qui peut être une grille chauffée par le passage d'un courant électrique tiré d'une batterie, puis, de proche en proche, la température TG de la grille 3, la température T2 à la sortie de cette grille, la température T3 à la sortie du tube 2 et enfin la température TC du pot catalytique 5.

Le tube 2 n'agissant que par son inertie thermique, on peut modéliser son influence sur la température des gaz qui le traversent comme celle d'un filtre du premier ordre. On a alors :

$$T1(i) = T(i-1) + M [T1st - T1(i-1)]$$

où

- T1(i) et T(i-1) sont la température à l'entrée de la grille 3 aux instants d'échantillonnage i et (i-1) respectivement, séparées par un intervalle de temps $\Delta t$ prédéterminé,
- M est un coefficient de filtrage, représentatif du tube 2, fonction du débit des gaz d'échappement,
- T1st est une grandeur homogène à une température, mise en mémoire "cartographique" et fonction de la position du point de fonctionnement du moteur, de la vitesse du véhicule que ce moteur entraîne, de la richesse en carburant du mélange air/carburant d'alimentation du moteur et, éventuellement, d'autres paramètres.

On peut alors estimer la température TG(i) de la grille 3 en écrivant que la variation de l'énergie de celle-ci pendant l'intervalle de temps $\Delta t$ séparant deux itérations successives est égale à la somme de l'énergie apportée par les échanges thermiques avec le gaz d'échappement et de l'énergie apportée par le chauffage de la grille, diminuée des pertes éventuelles avec l'extérieur, ce qui donne la relation suivante :

$$TG(i) = TG(i-1) + \frac{\dfrac{U^2}{R} \times \Delta t + Hconvg.[T1(i) - TG(i-1) + KG.[Text - TG(i-1)]}{MG.CG},$$

où :

- TG : Température de la grille (en ° K)
- U : Tension d'alimentation de la grille (en V)
- R : Résistance électrique de la grille (en $\Omega$)
- Hconvg : Coefficient d'échange convectif entre la grille et les gaz, fonction du débit de gaz (en Joule par ° K)
- KG : Coefficient d'échange thermique entre la grille et l'extérieur fonction, au premier ordre, de la vitesse du véhicule (en Joule par ° K)
- Text : Température ambiante (en ° K)
- MG : Masse de la grille (en kg)
- CG : Capacité calorifique massique de la grille (en J/kg). Celle-ci peut dépendre de la température de la grille à l'instant précédent.

On peut éventuellement négliger les pertes thermiques vers l'extérieur, s'il s'avère que celles-ci sont négligeables par rapport aux autres termes.

On remarquera que, suivant l'invention, on tient compte non seulement de la capacité thermique MG.CG de la grille, mais aussi du fait que les échanges thermiques entre la grille et les gaz d'échappement sont des échanges convectifs (coefficient Hconvg) du fait de la circulation de ces gaz dans la ligne d'échappement. On tient compte aussi, éventuellement, des pertes résultant du refroidissement de l'organe de chauffage 3 par l'air extérieur dans lequel se déplace le véhicule automobile propulsé par le moteur 1.

On peut alors estimer la température T2 des gaz d'échappement, à la sortie de cet organe de chauffage en écrivant que les échanges thermiques entre l'organe 3 et les gaz d'échappement sont égaux à la variation d'énergie de ces gaz passant d'une température T1(i-1) à la température T2(i), soit :

$$T2(i) = T1(i-1) + \frac{Hconvg.[TG(i-1) - T1(i)]}{DECH.Cpair},$$

où :

- DECH : Masse des gaz d'échappement ayant traversé le système pendant l'intervalle de temps considéré (en kg)
- Cpair Capacité calorifique des gaz d'échappement (en J/kg.° K)

Le tube 4 présente une inertie thermique et provoque des pertes thermiques vers l'extérieur. La relation liant la température T3 des gaz d'échappement à l'entrée du pot catalytique à la température T2 prend alors la forme d'une fonction de transfert du premier ordre :

$$T3(i) = T3(i-1) + M'.[N'.T2(i) - T3(i-1)],$$

où

- M' : Coefficient de filtrage, fonction du débit de gaz, représentatif de l'inertie de la portion de ligne d'échappement située entre la grille et le pot catalytique 5, et
- N' : Gain dépendant essentiellement du débit des gaz d'échappement, représentatif des déperditions thermiques vers l'extérieur entre la sortie de la grille 3 et l'entrée du pot 5.

On peut maintenant calculer une estimation de la température TC(i) de la zone d'entrée du pot catalytique 5 à l'instant courant i en écrivant que la variation d'énergie thermique du pot, pendant l'intervalle de temps $\Delta t$ séparant deux itérations successives, est égale à la somme de l'énergie apportée par les échanges thermiques avec les gaz d'échappement et de l'énergie apportée par les réactions d'oxydation d'espèces chimiques polluantes dans le pot, diminuée des pertes d'énergie thermique éventuelles avec l'extérieur, ce qui donne :

$$TC(i) = TC(i-1) + \frac{Exo. Reac + Hconvc.[T3(i) - TC(i-1)] + KC.[Text - TC(i-1)]}{MC.CC},$$

où :

- Exo Coefficient représentatif de l'énergie dégagée par les réactions d'oxydation au sein du pot 5 pendant l'intervalle de temps $\Delta t$.
- Reac : Coefficient représentatif de l'état d'amorçage du pot 5. Celui-ci est nul lorsque le pot 5 est froid.
- Hconvc : Coefficient d'échange convectif entre le pot 5 et les gaz, fonction du débit des gaz d'échappement
- KC : Coefficient d'échange thermique entre le pot 5 et l'extérieur, fonction au premier ordre de la vitesse du véhicule
- Text : Température ambiante,
- MC.CC : Image de la capacité calorifique de la zone considérée du pot 5.

On peut éventuellement négliger les pertes thermiques vers l'extérieur si celles-ci s'avèrent négligeables par rapport aux autres termes.

Dans ce qui précède, on part de l'hypothèse que l'essentiel de l'énergie chimique provient des réactions d'oxydation du monoxyde de carbone CO. La quantité d'énergie dégagée est donc proportionnelle au nombre de réactions d'oxydation de CO qui s'effectuent pendant l'intervalle de temps $\Delta t$ considéré. On estime alors le débit de CO, utilisable par le pot 5, en provenance du moteur et on suppose que l'énergie dégagée dans le volume du pot varie linéairement avec le débit de CO, soit :

$$Exo = K1.(\text{débit de CO}),$$

avec :

- K1 : Coefficient constant pour un type de fonctionnement donné : mélange air/carburant stoechiométrique ou "pauvre", injection d'air à l'échappement, etc...

On remarquera que TC(i) étant fonction de la température T3(i), elle-même fonction de T2(i), elle-même fonction de T1(i), la température du pot 5 est finalement fonction de celle de la grille 3.

Il apparaît maintenant que l'invention permet bien d'atteindre le but annoncé, à savoir estimer avec précision, y compris lors des phases de fonctionnement transitoires du moteur, la température du pot catalytique par la prise en compte, non seulement des capacités thermiques des gaz d'échappement, de la grille 3 et du pot 5, mais aussi du caractère convectif des échanges thermiques entre les gaz d'échappement et cette grille et ce pot, et aussi d'éventuelles pertes thermiques avec l'extérieur.

Bien entendu, l'invention n'est pas limitée au mode de réalisation décrit qui n'a été donné qu'à titre d'exemple. Dans celui-ci, on calcule successivement les températures au long de la ligne d'échappement, à l'instant i. C'est ainsi que, connaissant T1(i), on calcule ensuite TG(i) et T2(i), T3(i) et finalement TC(i).

On pourrait aussi, connaissant la température à l'entrée de la grille ou du pot à l'instant (i-1), calculer la température de la grille à l'instant (i). Dans ce cas, on calcule successivement T1(i), TG(i+1), T2(i+1), T3(i+1) et finalement TC(i+2).

## Revendications

1. Procédé d'estimation de la température d'un pot catalytique (5) de traitement des gaz d'échappement d'un moteur (1) à combustion interne passant dans une ligne d'échappement (2,3,4,5) comportant, en amont du pot, un organe de chauffage électrique (3) desdits gaz d'échappement, caractérisé en ce que :

   a) on estime par des calculs itératifs la température courante TG(i) dudit organe de chauffage (3) en fonction de l'énergie qui lui est fournie, de la capacité thermique dudit organe (3), et d'un échange thermique convectif entre l'organe (3) et les gaz d'échappement, et

   b) on estime par des calculs itératifs la température courante TC(i) du pot catalytique (5), en fonction de la température courante dudit organe (3), de la capacité thermique du pot (5), d'un échange thermique convectif entre le pot et les gaz d'échappement, et de l'énergie dégagée dans le pot (5) par des réactions d'oxydation d'espèces chimiques polluantes contenues dans lesdits gaz d'échappement.

2. Procédé conforme à la revendication 1, caractérisé en ce que ladite température courante TG(i) dudit organe de chauffage (3) est aussi fonction d'échanges thermiques entre ledit organe de chauffage (3) et l'extérieur.

3. Procédé conforme à la revendication 2, caractérisé en ce que ladite température courante TC(i) dudit pot catalytique (5) est aussi fonction d'échanges thermiques entre ledit pot (5) et l'extérieur.

4. Procédé conforme à l'une quelconque des revendications 1 à 3, caractérisé en ce qu'on estime la température TG(i) de l'organe de chauffage (3) par la relation :

$$TG(i) = TG(i-1) + \frac{\frac{U^2}{R} \times \Delta t + Hconvg.[T1(i) - TG(i-1) + KG.[Text - TG(i-1)]}{MG.CG},$$

où :

- U : Tension d'alimentation de l'organe de chauffage (3), chauffé par effet Joule,
- R : Résistance électrique de l'organe de chauffage (3)
- Hconvg : Coefficient d'échange convectif entre l'organe (3) et les gaz, fonction du débit de gaz
- KG : Coefficient d'échange thermique entre l'organe (3) et l'extérieur,
- Text : Température ambiante

- MG : Masse de l'organe (3)
- CG : Capacité calorifique massique de l'organe (3)
- T1(i) : Température à l'entrée de l'organe de chauffage (3)

5. Procédé conforme à la revendication 4, caractérisé en ce qu'on estime la température T1(i) à l'entrée de l'organe de chauffage (3) à l'aide de la relation :

$$T1(i) = T(i-1) + M [T1st - T1(i-1)]$$

où : M est un coefficient de filtrage et T1st une grandeur homogène à une température, mise en mémoire.

6. Procédé conforme à l'une quelconque des revendications 4 et 5, caractérisé en ce que, avant l'étape b) de la revendication 1, on calcule la température courante T2(i) à la sortie de l'organe de chauffage (3) à l'aide de la relation :

$$T2(i) = T1(i-1) + \frac{Hconvg.[TG(i-1) - T1(i)]}{DECH.Cpair},$$

où :

- DECH : Masse des gaz d'échappement ayant traversé le système pendant l'intervalle de temps considéré
- Cpair : Capacité calorifique des gaz d'échappement.

7. Procédé conforme à la revendication 6, caractérisé en ce qu'on calcule la température courante T3(i) à l'entrée du pot catalytique (5) à l'aide de la relation :

$$T3(i) = T3(i-1) + M'.[N'.T2(i) - T3(i-1)],$$

où

- M' : Coefficient de filtrage, fonction du débit des gaz d'échappement, représentatif de l'inertie de la portion de ligne d'échappement située entre l'organe (3) et le pot catalytique (5), et
- N' : Gain dépendant essentiellement du débit des gaz d'échappement, représentatif des déperditions thermiques vers l'extérieur entre la sortie de l'organe (3) et l'entrée du pot (5).

8. Procédé conforme à la revendication 7, caractérisé en ce que, à l'étape b) de la revendication 1, on calcule la température courante TC(i) d'une zone considérée du pot catalytique (5) à l'aide de la relation :

$$TC(i) = TC(i-1) + \frac{Exo. Reac + Hconvc.[T3(i) - TC(i-1)] + KC.[Text - TC(i-1)]}{MC.CC},$$

où :

- Exo Coefficient représentatif de l'énergie dégagée par les réactions d'oxydation au sein du pot 5 pendant l'intervalle de temps $\Delta t$,
- Reac : Coefficient représentatif de l'état d'amorçage du pot 5,
- Hconvc : Coefficient d'échange convectif entre le pot (5) et les gaz,
- KC : Coefficient d'échange thermique entre le pot (5) et l'extérieur,
- Text : Température ambiante,
- MC.CC : Image de la capacité calorifique de la zone considérée du pot (5).

9. Procédé conforme à la revendication 8, caractérisé en ce que ladite zone considérée du pot (5) est la zone d'entrée du pot.

T1      TG      T2      T3      TC

| MOTEUR | TUBE | GRILLE ELECTRIQUE | TUBE | POT CATALYTIQUE |
|--------|------|-------------------|------|-----------------|
| 1 | 2 | 3 | 4 | 5 |

**Office européen des brevets** — **RAPPORT DE RECHERCHE EUROPEENNE**

Numéro de la demande

EP 00 40 1648

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 600 947 A (CULLEN MICHAEL J) 11 février 1997 (1997-02-11) * figures 1,2A * * abrégé * | 1 | F01N11/00 |
| A | * colonne 3, ligne 3 - colonne 5, ligne 29 * | 2-9 | |
| A | US 4 656 829 A (CREPS WENDELL D ET AL) 14 avril 1987 (1987-04-14) * figure 4 * * abrégé * * revendications 1-3 * | 1 | |
| A | GB 2 277 594 A (FORD MOTOR CO) 2 novembre 1994 (1994-11-02) * figure 1 * * abrégé * * revendications 1,2 * | 1 | |
| A | US 5 740 675 A (KOMATSUDA TAKASHI ET AL) 21 avril 1998 (1998-04-21) * figures 1,2 * * abrégé * * revendications 1,11 * | 1,2 | **DOMAINES TECHNIQUES RECHERCHES (Int.Cl.7)** F01N |

Le présent rapport a été établi pour toutes les revendications

| Lieu de la recherche | Date d'achèvement de la recherche | Examinateur |
|---|---|---|
| LA HAYE | 14 juillet 2000 | Wassenaar, G |

**ANNEXE AU RAPPORT DE RECHERCHE EUROPEENNE
RELATIF A LA DEMANDE DE BREVET EUROPEEN NO.**

EP 00 40 1648

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-07-2000

| Document brevet cité au rapport de recherche | | Date de publication | Membre(s) de la famille de brevet(s) | | Date de publication |
|---|---|---|---|---|---|
| US 5600947 | A | 11-02-1997 | AUCUN | | |
| US 4656829 | A | 14-04-1987 | CA | 1262482 A | 24-10-1989 |
| | | | EP | 0231611 A | 12-08-1987 |
| | | | JP | 62203965 A | 08-09-1987 |
| GB 2277594 | A | 02-11-1994 | AUCUN | | |
| US 5740675 | A | 21-04-1998 | JP | 9004502 A | 07-01-1997 |

EPO FORM P0460